# EUROPEAN PATENT APPLICATION

(11) **EP 4 803 777 A1**
(43) Date of publication of application: **09.09.2026**
(21) Application number: 26162715.2
(22) Date of filing: 05.03.2026
(51) Int. Cl.: F16H 3/42

(54) **GEARBOX WITH A DRIVEN CONICAL CROWN WHEEL AND A DRIVING CONICAL CROWN WHEEL**

(30) Priority: 07.03.2025 IT 202500004806
(71) Applicant: Corimag S.r.l., 10080 Bosconero (TO) (IT)
(72) Inventor: ANDRINA, Giovanni Battista Bernardo, 10080 BOSCONERO (TO) (IT)
(74) Representative: Robba, Pierpaolo

(57) **Abstract**

The present invention relates to a gearbox (30; 40) with gears comprising a driving wheel (4) and a driven wheel (3) facing each other, which are arranged on a common rotation axis and are provided, on their respective facing surfaces (21, 22), with crown gears (5A, 5B) arranged on different diameters of said wheels (4, 3). Said surfaces are conical, so as to be inclined by an inclination angle (α) relative to the respective rotation axis of said wheels (4, 3), and said gearbox (30; 40) further comprises a rod (9), which extends along a longitudinal axis (19) arranged transversely to the rotation axis of said wheels (4, 3) and carries a gear system comprising first gears (7A') designed to mesh with crown gears (5A) of the driving wheel (4) and second gears (7B') designed to mesh with crown gears (5B) of the driven wheel (3).

## Description

### Technical Field of the Invention

The present invention relates to a gearbox with gears having front wheels, preferably coaxial, arranged facing each other and provided with teeth on their respective facing surfaces.

More particularly, said gears are designed as crown gears arranged concentrically on said facing surfaces at different diameters of said wheels, and said facing surfaces are conical. The invention advantageously finds application in all those cases where a face-type, coaxial arrangement of the wheels is required or preferred.

### Prior Art

Gearboxes are well-known and widely used in a variety of applications across various technical sectors where it is necessary or desirable to vary the speed between a drive shaft and a driven shaft.

In particular, gearboxes are known in which the drive shaft carries a first gear (driving gear) and the driven shaft carries a second gear (driven gear).

For example, U.S. patent document No. 2004 043852 A1 describes a gearbox comprising a driving wheel and a driven wheel arranged face-to-face.

Each of said wheels, on its surface facing the other wheel, comprises respective crown gears arranged concentrically on different diameters of the wheel itself and formed with teeth that protrude from said facing surfaces of the wheels.

This gearbox also includes a shaft positioned between said driving wheel and said driven wheel and equipped with a number of first gears that can be selectively engaged with the crown gears of the driving wheel, and a number of second gears that can be selectively engaged with the crown gears of the driven wheel via engagement means that allow any one of the first gears and any one of the second gears to be selected.

This type of gearbox allows for a sufficient number of gear ratios; however, it requires that the driving wheel and the driven wheel rotate on separate, parallel axes, making this type of gearbox particularly bulky and complex.

The object of the present invention is to solve the aforementioned problem of the prior art by providing a gearbox with front wheels that, while allowing for a large number of different gear ratios, is compact, simple to manufacture, and reliable.

### Summary of the Invention

The aforementioned and other objects and advantages of the invention, as will become apparent from the following description, are achieved by a gearbox with front toothed wheels as described in claim 1.

Preferred embodiments and non-trivial variations of the present invention are the subject matter of the dependent claims.

It is understood that all of the attached claims form an integral part of this description.

In general, the gearbox according to the invention comprises a driving wheel and a driven wheel arranged facing each other.

Said driving wheel and said driven wheel rotate about respective axes of rotation, which are parallel to each other and coincide (that is, the driving wheel and the driven wheel rotate about a common rotation axis).

Each of said wheels, on the surface facing the other wheel, includes respective crown gears arranged concentrically on different diameters of the wheel itself and formed with teeth that protrude from said facing surfaces of the wheels.

The facing surfaces equipped with teeth are conical in shape so as to be inclined relative to the (common) rotation axis of said wheels, and the gearbox includes a shaft positioned between said wheels. Said shaft carries a gear system comprising one or more first gears designed to mesh with crown gears of the driving wheel without interfering with the crown gears of the driven wheel, and one or more second gears designed to mesh with the crown gears of the driven wheel without interfering with the crown gears of the driving wheel.

In a first embodiment of the invention, in order to achieve a wide range of gear ratios, the gear system comprises at least one first gear and at least one second gear, and at least one of said first gear and said second gear is mounted to said shaft so as to be axially slidable. Preferably, both said first gear and said second gear are mounted to said shaft so as to be axially slidable independently of each other.

In a second embodiment of the invention, in order to achieve a wide range of gear ratios, the gear system comprises a number of first gears equal to the number of the crown gears of the driving wheel, each of said first gears being placed at one of said crown gears of said driving wheel, and a number of second gears equal to the number of the crown gears of the driven wheel, each of said second gears being placed at one of said crown gears of said driven wheel, and at any given time it is possible to select one of the first gears and engage the selected first gear with the corresponding crown gear of the driving wheel, and to select one of the second gears and engage the selected second gear with the corresponding crown gear of the driven wheel.

In this second embodiment, the rod is preferably arranged relative to the driving wheel and the driven wheel in such a way that said rod is inclined relative to the rotation axis of the driving wheel and the driven wheel by an inclination angle substantially equal to the inclination angle formed between said rotation axis and the conical facing surfaces of said wheels.

In that case, the first gears and the second gears on the rod should preferably have the same diameter.

However, in alternative embodiments, the rod could be arranged in such a way that it is inclined relative to the rotation axis of the wheels by an inclination angle greater than the inclination angle formed between that rotation axis and the conical facing surfaces of said wheels.

For example, the rod could be perpendicular to the rotation axis of the wheels.

In these alternative embodiments, the first gears and the second gears preferably have a diameter that increases as they move away from the rotation axis of the wheels.

### Brief Description of the Drawings

The present invention will be described in more detail by means of some preferred embodiments, provided by way of non-limiting example, with reference to the annexed drawings, in which:
- Figure 1 is a perspective view of a gearbox with gears with conical coaxial front toothed wheels according to a first embodiment of the present invention;
- Figure 2 is a view from above of the gearbox of Figure 1;
- Figure 3 is a perspective view of a gearbox with gears with conical coaxial front toothed wheels according to a second embodiment of the present invention;
- Figure 4 is a perspective view of a gearbox with gears with conical coaxial front toothed wheels according to a third embodiment of the present invention;
- Figure 5 is a view from above of the gearbox of Figure 4;
- Figure 6 is a perspective view of a gearbox with gears with conical coaxial front toothed wheels according to a fourth embodiment of the present invention.

### Detailed Description of Some Preferred Embodiments of the Invention

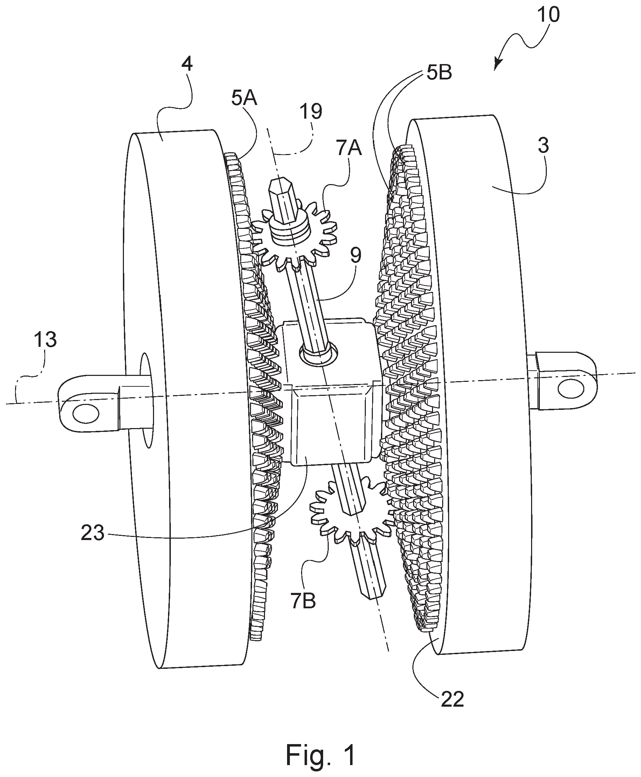

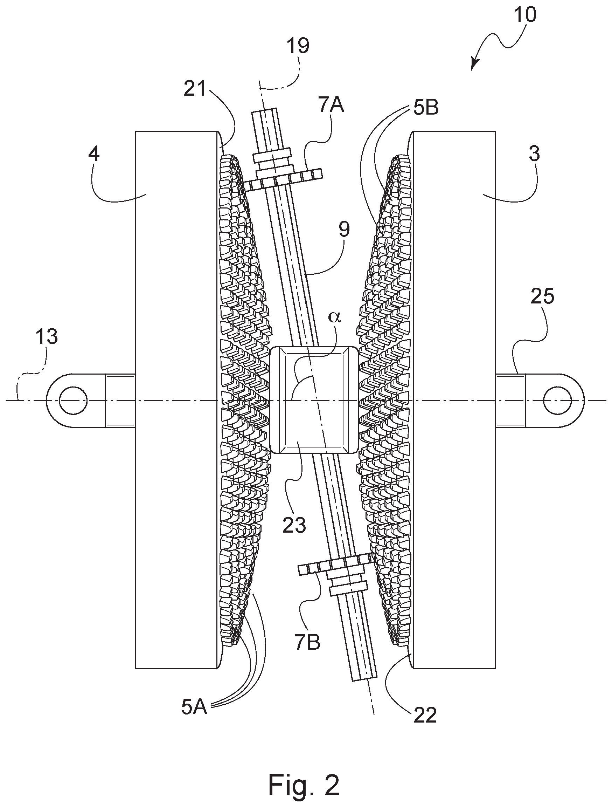

Referring at first to Figures 1 and 2, the gearbox according to the invention comprises a driving wheel 4 designed to be connected to a driving shaft (not shown) and a driven wheel 3 designed to be connected to a driven shaft (not shown). The wheels 4, 3 are arranged facing each other and rotating around a common rotation axis 13.

In the embodiment of Figures 1 and 2, a central hub 25 is placed along the rotation axis 13 and is adapted to pass through the wheels 4, 3 at their respective centers, said wheels 4, 3 being rotatable relative to said central hub 25, for example by means of interposed bearings.

Each of said wheels 4, 3, on its respective surface 21, 22 facing the other wheel, comprises respective crown gears 5A, 5B arranged concentrically on different diameters of the wheel, and formed with teeth that protrude from said facing surfaces 21, 22 of said wheels.

According to the invention, the surfaces 21, 22 of the wheels 4, 3 are conical in shape, with a taper angle 2α, whereby at every point they are locally inclined relative to the rotation axis 13 by an inclination angle α.

According to the illustrated embodiment, the crown gears 5A, 5B are mirror images of each other.

It will be clear that, in an alternative embodiment, the crown gears 5A of the driving wheel 4 could be arranged on different diameters than the crown gears 5B of the driven wheel 3 and therefore said crown gears 5A, 5B may not be mirror images of each other. Furthermore, also the teeth of said crown gears 5A, 5B may or may not be mirror images of one another.

The gearbox according to the invention further comprises a rod 9 having its longitudinal axis 19 arranged transversely to the rotation axis 13. The longitudinal axis 19 of the rod 9 is not orthogonal to the rotation axis 13 and is instead inclined relative thereto by an inclination angle substantially equal to the inclination angle α formed between said rotation axis 13 and the conical facing surfaces 21, 22 of the wheels 4, 3.

The rod 9 carries a gear system having gears suitable to mesh with respective crown gears 5A, 5B of the driving wheel 4 and the driven wheel 3 to transmit motion from said driving wheel 4 to said driven wheel 3.

It is clear that the teeth of said crown gears and the teeth of the gears of said gear system may be shaped in any manner suitable for achieving meshing between said gear system and said crown gears 5A, 5B.

Regardless of the embodiment, the rod 9 is free to rotate relative to its longitudinal axis 19 and therefore, thanks to the fact that the gear system is connected to the driving wheel 4 in a motion-transmitting manner, said rod is caused to rotated around said longitudinal axis 19 and the gears of said gear system are suitable to rotate integrally with said rod and synchronously with it.

Preferably, the gearbox comprises a support 23 for the rod 9, said support being mounted to the common central hub 25 of the wheels 4, 3 and is capable of supporting said rod 9 between the wheels 4, 3 while allowing the rotation of said rod 9 around its longitudinal axis 19.

The rotation of the rod 9 around the longitudinal axis 19 is made possible, for example, by interposing one or more bearings between said rod 9 and said support.

Preferably, the longitudinal axis 19 of the rod 9 and the rotation axis of the wheels 4, 3 lie on the same plane.

Providing said axes on the same plane advantageously makes it possible to manufacture a gearbox simpler than a gearbox where said axes are positioned on different planes.

This simplification allows for obtaining a particularly small-sized gearbox, as it makes it possible to reduce the diameter of the gears 4 and 3 compared to gearboxes in which said axes are positioned on different planes.

In a possible operating mode of the gearbox according to the invention, the central hub of the driving wheel 4 and the driven wheel 3 is fixed and serves to support the rotation of said wheels.

In the following detailed description of the preferred embodiments of the invention reference will be made to this operating mode.

However, it should be noted that other operating modes are possible, in which the functions of the components may be interchanged or used in other ways without departing from the scope of protection of the present invention.

For example, the driven wheel 3 may be kept fixed, and the central hub 25 may be caused to rotate by the driving wheel 4, causing, in turn, the support 23 and the rod 9 to rotate around the rotation axis 13; in this operating mode, the gears in the gear system act as planet gears.

Reverting to the embodiment of the invention shown in Figures 1 and 2, according to this embodiment, the gear system of the gearbox comprises at least one first gear 7A and at least one second gear 7B arranged on opposite portions of the rod 9, so that, thanks to the inclination angle α of the longitudinal axis 19 relative to the rotation axis of the wheels 4, 3, the first gear 7A can mesh with only one of the crown gears 5A of the driving wheel 4, without interfering with the teeth of the crown gears of the driven wheel 3, and the second gear 7B can to mesh with only one of the crown gears 5B of the driven wheel 3, without interfering with the teeth of the crown gears of the driving wheel 4.

As a result, the driving wheel 4 transmits motion, through one of the crown gears 5A, to the first gear 7A, which in turn transmits said motion to the second gear 7B, which finally transmits it, through one of the crown gears 5B, to the driven wheel 3.

According to the embodiment in Figures 1 and 2, at least one of the first gear 7A and the second gear 7B can slide axially along a portion of the longitudinal axis 19 of the rod 9. Preferably, both the first gear 7A and the second gear 7B can slide axially independently of each other, along respective portions of the longitudinal axis 19 of the rod 9.

For this purpose, said rod 9 has, at least at the portions along which said gears 7A, 7B can slide, a hexagonal cross-section that can be coupled to a corresponding hexagonal hole provided in each of said gears 7A, 7B.

Alternatively, said rod 9 could be made in any shape suitable for allowing sliding of said gears 7A, 7B along respective portions of the longitudinal axis 19.

For example, said rod 9 could be made, at least at the portions along which said gears 7A, 7B can slide, as a splined shaft designed to be mated with corresponding splined holes provided in each of said gears 7A, 7B.

By appropriately dimensioning the portions of the longitudinal axis 19 along which the gears 7A, 7B can slide axially, the sliding of said gears along said longitudinal axis, which sliding corresponds to a radial movement of said gears relative to the wheels 4, 3, allows said first gear 7A to mesh with any of the crown gears 5A of the driving wheel 4 and allows said second gear 7B to mesh with any of the crown gears 5B of the driven wheel 3. The gearbox with gears with conical coaxial front toothed wheels of the invention further comprises driving means (not shown) designed for driving the gears 7A, 7B and configured to move said gears 7A, 7B - independently of each other - along the longitudinal axis 19 of the rod 9 (upwards or downwards in Figures 1 and 2), in order to place said first gear 7A at one of the crown gears 5A of the driving wheel 4 and to place said second gear 7B at one of the crown gears 5B of the driven wheel 3.

Said driving means could be made, for example, as forks, each fork being coupled to a gear 7A and 7B in such a way that the translation of said forks, achieved through known mechanical/electrical/electronic systems, causes a corresponding translation of said gears 7A and 7B.

It will be apparent to the person skilled in the art that said driving means could be made according to numerous variants suitable to achieve sliding of said gears 7A and 7B along the longitudinal axis 19.

Depending on the crown gear 5A to which the first gear 7A is coupled and the crown gear 5B to which the second gear 7B is coupled, it is possible to change the gear ration between the driving wheel 4 and the driven wheel 3, thereby obtaining a change in the rotation speed of the driven wheel 3 relative to the driving wheel 4.

The possibility of making said gears 7A, 7B slide independently of each other makes it possible to associate, by means of said gears, any crown gear 5A of the driving wheel 4 to any crown gear 5B of the driven wheel 3, allowing an extremely high number of gear ratios corresponding to the product of the number of crown gears 5A on the driving wheel 4 and the number of crown gears 5B on the driven wheel 3.

For example, in the first embodiment described above, as the driving wheel 4 and the driven wheel 3 each have seven crown gears, it is possible to obtain up to forty-nine different gear ratios.

Therefore, thanks to the invention it is possible to achieve a high number of gear ratios while keeping the number of crown gears on each wheel small, thereby enabling the manufacturing of a small-sized gearbox.

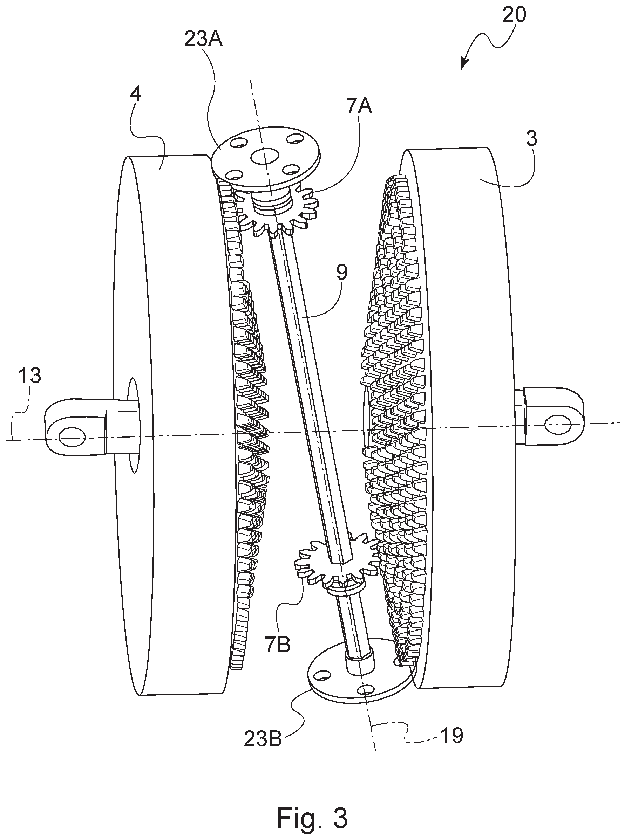

It will be apparent to the person skilled in the art that, if only one of the first and second gear is free to slide axially along the longitudinal axis 19, in order to achieve the same result, it will be necessary to provide that the rod 9 can slide axially along the support 23. For example, assuming that only the first gear 7A is slidably mounted to the rod 9, the crown gear 5B of the driven wheel 3 will be selected by translating the whole rod 9 (with the second gear 7B integral therewith) and then the crown gear 5A of the driving wheel 4 will be selected by sliding the first gear 7A along the longitudinal axis of said rod. Turning to Figure 3, this shows a second embodiment of the gearbox, indicated by reference numeral 20.

The structure and operation of most of the components of the gearbox 20 are essentially identical to those described above in relation to the first embodiment and will therefore not be described in detail again.

In the second embodiment, unlike the first embodiment, the gearbox does not include a common central hub for the wheels 4, 3.

Accordingly, no central support for the rod 9 is mounted on said hub.

Instead, in order to support the rod 9 between the wheels 4, 3 there are provided a first support element 23A and a second support element 23B arranged near or at the opposite ends of the rod 9, so that the gears 7A, 7B are arranged between said first and second support elements 23A, 23B.

Thanks to the elimination of the central hub and central support for the rod 9, in this second embodiment it is possible to obtain crown gears 5A, 5B closer to the rotation axis 13, thus allowing to reduce the radial clearance of the wheels 4, 3.

In addition, the absence of a central hub makes it possible to disengage the wheels 3,4 from each other more than in the first embodiment, while keeping them coaxial with the rotation axis 13.

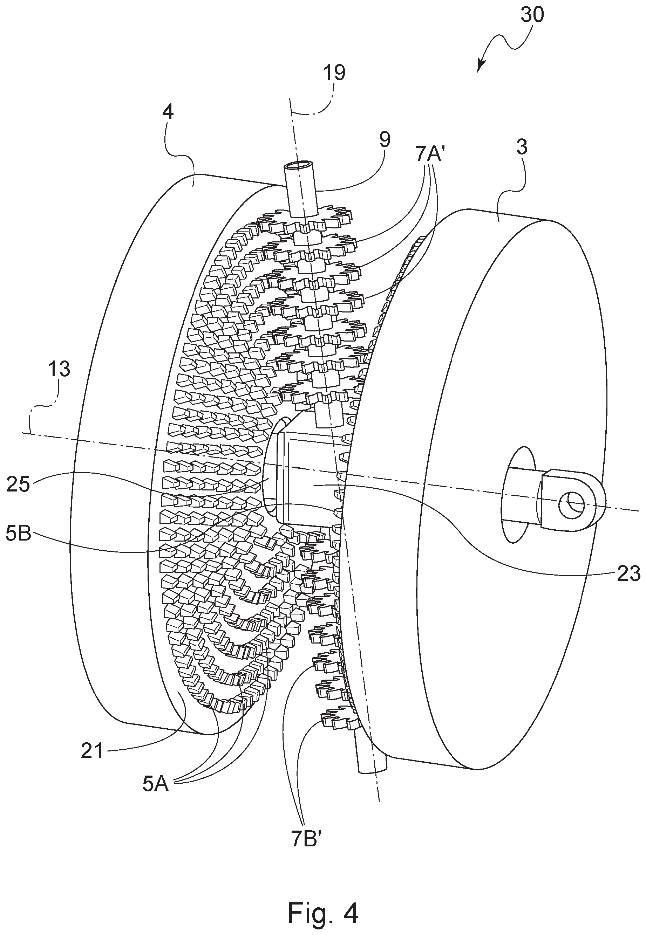

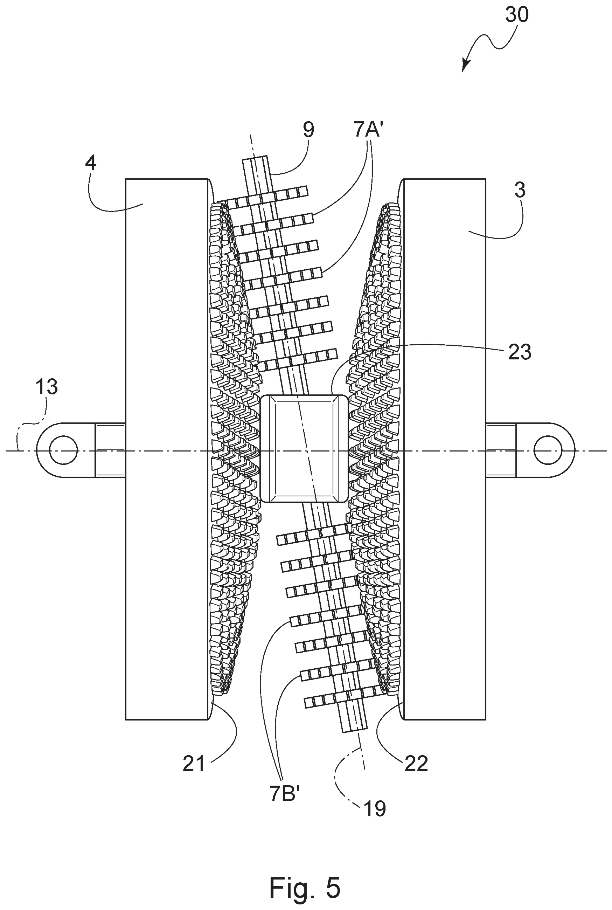

Figures 4 and 5 show a third embodiment of the gearbox, indicated by reference numeral 30.

The structure and operation of most of the components of the gearbox 30 are essentially identical to those described above in relation to the first and second embodiments and will therefore not be described in detail again.

Unlike the first and second embodiments, in the third embodiment the gear system of the gearbox 30 comprises a number of first gears 7A' equal to the number of the crown gears 5A of said driving wheel 4, each of said first gears 7A' being placed at one of said crown wheels 5A, and a number of second gears 7B' equal to the number of the crown gears 5B of said driven wheel 3, each of said second gears 7B' being placed at one of said crown gears 5B.

In this embodiment, the first and second gears 7A', 7B' are thus preferably fixedly connected to the rod 9, without being able to slide along the longitudinal axis 19.

The gearbox 30 further comprises engagement means (not shown) which allow, on one part, to select one of said first gears 7A' and to couple only said first selected gear 7A' to the respective crown gear 5A of the driving wheel 4, and, on the other part, to select one of said second gears 7B' and to couple only said second selected gear 7B' to the respective crown gear 5B of the driven wheel 3.

Therefore, the first gears 7A' rotate idly around the longitudinal axis 19, except for the gear selected by means of said engagement means, which gear rotates integrally with said rod 9 and meshes with the respective crown gear 5A of the driving wheel 4. Similarly, the second gears 7B' rotate idly around the longitudinal axis 19, except for the gear selected by means of said engagement means, which gear rotates integrally with said rod 9 and meshes with the respective crown gear 5B of the driven wheel 3.

In this third embodiment as well, the longitudinal axis 19 of the rod 9 is inclined relative to the rotation axis 13 by an inclination angle substantially equal to the inclination angle α formed between said rotation axis 13 and the conical facing surfaces 21, 22 of said wheels 4,3.

This makes it possible to use first gears 7A' and second gears 7B' all having the same diameter.

Indeed, thanks to the inclination angle α of the longitudinal axis 19 relative to the rotation axis 13, the first gears 7A', though having the same diameter as the second gears 7B', can mesh only with the crown gears 5A of the driving wheel 4, without interfering with the driven wheel 3, and the second gears 7B', though having the same diameter as the first gears 7A', can mesh only with the crown gears 5B of the driven wheel 3, without interfering with the driving wheel 4.

Consequently, the driving wheel 4, trough the corresponding crown gear 5A, transmits motion to the first gear 7A' that has been selected and engaged, and the motion is transmitted to the second gear 7B' that has been selected and engaged, which in turn transmits it to the driven wheel 3 through the corresponding crown gear 5B.

Depending on the first gears 7A' and the second gears 7B' selected through the engaging means it is possible to change the gear ratio between the driving wheel 4 and the driven wheel 3.

Similarly to the first and second embodiments, the possibility of meshing any of said first gears 7A' and any of said second gears 7B' independently of each other allows to associate, through said gears, any crown gear 5A of the driving wheel 4 to any crown gear 5B of the driven wheel 3, allowing for a number of gear ratios corresponding to the product of the number of crown gears 5A on the driving wheel 4 and the number of crown gears 5B on the driven wheel 3.

As in this third embodiment, too, the driving wheel 4 and the driven wheel 3 each have seven crown gears, it is possible to achieve up to forty-nine different gear ratios.

Therefore, this third embodiment allows for an extremely high number of gear ratios and - thanks to the conical surfaces of the wheels, which enable said wheels to be arranged coaxially - allows to significantly reduce the overall size of the gearbox compared to currently known solutions.

The coaxial arrangement of the wheels also allows said wheels to rotate around a common rotation axis (i.e., a kinematic axis), this making it possible to simplify the gearbox compared to currently known gearboxes.

Said engaging means may be formed, for example, by coupling each of said first and second gears 7A', 7B' to a corresponding expansion device.

Each of said expansion devices is arranged to selectively engage one of said first gears 7A' and one of said second gears 7B' in order to couple them to the respective crown gears 5A, 5B.

For example, each expansion device can be made as a plurality of balls (not shown) designed to be controlled by a sliding rod: when said rod comes into contact with said plurality of balls, it sets said balls in motion, in a radial direction relative to the longitudinal axis 19, said motion, in turn, causing engagement of said first and/or second gear 7A', 7B' coupled to said plurality of balls.

In particular, when said sliding rod comes into contact with said plurality of balls, it pushes said plurality of balls against the corresponding first/second gear 7A', 7B', thereby causing integral rotation of said first/second gear 7A', 7B' with the rod 9 and engagement of said first/second gear 7A', 7B' with the respective crown gears 5A, 5B.

Preferably, said sliding rod is inserted in the rod 9. Unlike the first and second embodiments, as in the third embodiment said first and second gears 7A', 7B' are already at the respective crown gears 5A, 5B, coupling of said first and second gears 7A', 7B' to the crown gears 5A, 5B does not require any axial sliding of said gears along the longitudinal axis 19.

This makes it possible, advantageously, to reduce the space between the crown gears 5A, 5B on the toother wheels 3, 4, allowing for a particularly compact gearbox and reducing the time required to change the gear ratio compared to that achievable with the gearboxes of the first and second embodiments.

Furthermore, in said third embodiment, as the first and second gears 7A', 7B' are already at the respective crown gears 5A, 5B, the teeth of said first and second gears 7A', 7B' and the teeth of said crown gears 5A, 5B can be made with an involute circle profile, allowing to increase the transmission efficiency of the gearbox.

Said involute circle profile can also be customized to suit the specific applications for which the gearbox is intended.

Similarly to the first embodiment, in this third embodiment, too, said mechanical gearbox 30 comprises a central support 23 arranged between the two toothed wheels 4, 3 and coupled to a central hub 25.

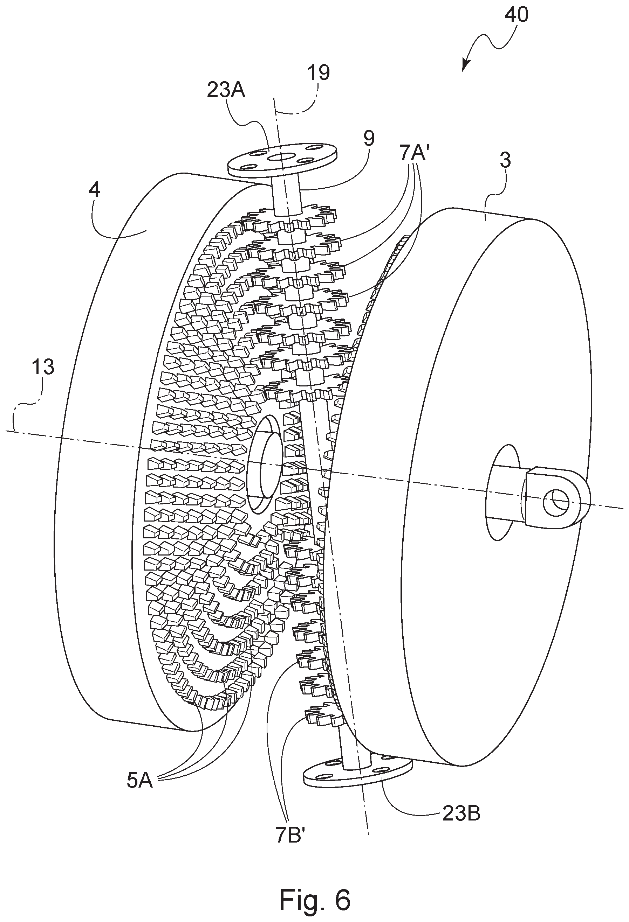

Turning to Figure 6, this shows a fourth embodiment of the gearbox, indicated by reference numeral 40.

The structure and operation of most of the components of the gearbox 40 are essentially identical to those described above in relation to the third embodiment and will therefore not be described in detail again.

In the fourth embodiment of the invention, similarly to what has been described above in connection with the second embodiment, the gearbox does not include a common central hub for the wheels 4, 3, and, correspondingly, no central support intended for the rod 9 and mounted to said hub is provided.

In order to support the rod 9 between the wheels 4, 3, there are provided a first support element 23A and a second support element 23B which are arranged near or at the opposite ends of the rod 9, and said first and second gears 7A', 7B' are arranged on the rod 9 between said first and second support elements 23A, 23B.

It will be clear that, in the third and fourth embodiments as well, it is possible to arrange the rod 9 in such a way that the longitudinal axis 19 is inclined relative to the rotation axis 13 by an inclination angle greater than the inclination angle α formed between said rotation axis 13 and the conical facing surfaces of the wheels 4, 3.

For example, the longitudinal axis 19 of the rod 9 could be perpendicular to the rotation axis 13.

If the longitudinal axis 19 is inclined relative to the rotation axis 13 by an inclination angle greater than the inclination angle α, the first gears 7A' and the second gears 7B' preferably have diameters that increase with their distance from the rotation axis 13.

It will also be apparent to the person skilled in the art that the embodiments described in detail above should by no means be intended to be limiting, and that numerous variations and modifications are possible without departing from the scope of the invention as defined by the appended claims.

In particular, it will be apparent that the number of the crown gears can be varied according to the required gear ratios and manufacturing capabilities and that the support for the rod 9 can be designed in any way that allows the rod 9 to be positioned between the toothed wheels 4, 3 in such a way as to allow said rod to rotate around the longitudinal axis 19.

## Claims

1. Gearbox (30; 40) with gears comprising a driving wheel (4) and a driven wheel (3) arranged facing each other and rotating around a common rotation axis (13), wherein each of said wheels (4, 3), on the surface (21, 22) facing the other of said wheels, comprises respective crown gears (5A, 5B) concentrically arranged on different diameters of the wheel itself and made with teeth protruding from said facing surfaces (21, 22) of said wheels, wherein said facing surfaces (21, 22) of said wheels (4, 3) have a conical shape so as to be inclined by a non-zero inclination angle (α) with respect to the rotation axis (13) of the respective wheels (4, 3), wherein said gearbox further comprises a rod (9) arranged between said wheels (4, 3) and having its longitudinal axis (19) arranged transversely to the rotation axis of said wheels (4, 3), wherein said rod (9) is free to rotate around said longitudinal axis (19), and wherein said rod (9) carries a gear system comprising a number of first gears (7A') equal to the number of crown gears (5A) of said driving wheel (4), each of said first gears (7A') being placed at one of said crown gears (5A) of said driving wheel (4), and a number of second gears (7B') equal to the number of crown gears (5B) of said driven wheel (3), each of said second gears (7B') being placed at one of said crown gears (5B) of said driven wheel (3), said first and second gears (7A', 7B') being suitable to rotate integrally with said rod (9) and synchronously with it, wherein said gearbox further comprises engagement means that allow, on the one hand, to select one of said first gears (7A') and to couple said selected first gear to the respective crown gear (5A) of said driving wheel (4), and, on the other hand, to select one of said second gears (7B') and to couple said selected second gear to the respective crown gear (5B) of said driven wheel (3).

2. Gearbox (30; 40) according to claim 1, wherein said rod (9) is arranged between said driving wheel (4) and said driven wheel (3) in such a way that the longitudinal axis (19) of said rod (9) is inclined relative to said rotation axis (13) by an inclination angle substantially equal to the inclination angle (α) formed between said rotation axis (13) and the conical facing surfaces (21, 22) of said wheels (4, 3).

3. Gearbox (30; 40) according to claim 2, wherein said first and second wheels (7A', 7B') have the same diameter.

4. Gearbox (30; 40) according to claim 1, wherein said (9) is arranged between said driving wheel (4) and said driven wheel (3) in such a way that the longitudinal axis (19) of said rod (9) is inclined relative to said rotation axis (13) by an inclination angle greater than the inclination angle (α) formed between said rotation axis (13) and the conical facing surfaces (21, 22) of said wheels (4, 3).

5. Gearbox (30; 40) according to claim 4, wherein the first gears (7A') and the second gears (7B') have diameters that increase with their distance from said rotation axis (13).

6. Gearbox (30; 40) according to claim 4 or 5, wherein said longitudinal axis (19) is perpendicular to the rotation axis (13).

7. Gearbox (30; 40) according to any of the preceding claims, wherein said first gears (7A') are arranged to rotate idly around the longitudinal axis (19) of said rod (9), except for the gear selected by means of said engagement means, which gear rotates integrally with said rod (9) and meshes with the respective crown gear (5A) of the driving wheel (4), and wherein said rod (7B') are arranged to rotate idly around the longitudinal axis (19) of said rod (9), except for the gear selected by means of said engagement means, which gear rotates integrally with said rod (9) and meshes with the respective crown gear (5B) of the driven wheel (3).

8. Gearbox (30; 40) according to claim 7, wherein said engagement means are made by coupling each of said first and second gears (7A', 7B') to a respective expansion device, and wherein each of said expansion devices is suitable to selectively engage one of said first gears (7A') and one of said second gears (7B') to couple them to the respective crown gears (5A, 5B).

9. Gearbox (30; 40) according to claim 8, wherein said engagement means further comprises a sliding rod, and wherein each expansion device is made as a plurality of balls, wherein said sliding rod is designed to selectively come into contact with said plurality of balls in order to cause motion of said plurality of balls in a radial direction relative to said longitudinal axis (19), said motion in a radial direction pushing said plurality of balls against the corresponding first/second gear (7A', 7B'), thereby causing integral rotation of said first/second gear (7A', 7B') with the rod (9) and coupling of said first/second gear (7A', 7B') to the respective crown gears (5A, 5B).

10. Gearbox (30; 40) according to claim 9, wherein said sliding rod is inserted in the rod (9).

11. Gearbox (30; 40) according to any of the preceding claims, wherein said gearbox (30; 40) comprises a support (23; 23A, 23B) capable of supporting said rod (9) between said wheels (4, 3) while allowing rotation of said rod (9) around said longitudinal axis (19).

12. Gearbox (30) according to claim 11, wherein said gearbox comprises a central hub (25) placed along said rotation axis (13), and a support (23) intended for said rod (9) and mounted to said central hub (25).

13. Gearbox (40) according to claim 11, wherein said gearbox comprises a first support element (23A) and a second support element (23B) which are arranged near or at the opposite ends of the rod (9), said first and second gears (7A,7B) being arranged on said rod between said first and second support elements.
